(19) Europäisches Patentamt / European Patent Office / Office européen des brevets

(11) **EP 4 353 492 A1**

(12) **EUROPEAN PATENT APPLICATION**
published in accordance with Art. 153(4) EPC

(43) Date of publication:
**17.04.2024 Bulletin 2024/16**

(21) Application number: **22820034.1**

(22) Date of filing: **23.05.2022**

(51) International Patent Classification (IPC):
**B60B 21/12** (2006.01)     **C09J 133/00** (2006.01)
**C09J 201/00** (2006.01)     **C09J 7/25** (2018.01)
**C09J 7/29** (2018.01)       **C09J 7/38** (2018.01)

(52) Cooperative Patent Classification (CPC):
**B60B 21/12; C09J 7/25; C09J 7/29; C09J 7/38; C09J 133/00; C09J 201/00**

(86) International application number:
**PCT/JP2022/021145**

(87) International publication number:
**WO 2022/259852 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.06.2021 JP 2021095920**

(71) Applicant: **Nitto Denko Corporation**
**Ibaraki-shi, Osaka 567-8680 (JP)**

(72) Inventors:
• **MOMIKI, Yuta**
  **Ibaraki-shi, Osaka 567-8680 (JP)**
• **OTAKE, Hironao**
  **Ibaraki-shi, Osaka 567-8680 (JP)**
• **WATANABE, Hiroyuki**
  **Ibaraki-shi, Osaka 567-8680 (JP)**
• **YAMAMOTO, Shuhei**
  **Ibaraki-shi, Osaka 567-8680 (JP)**

(74) Representative: **Müller-Boré & Partner**
**Patentanwälte PartG mbB**
**Friedenheimer Brücke 21**
**80639 München (DE)**

(54) **ADHESIVE SHEET FOR BICYCLE RIMS**

(57)    Provided is a bicycle rim pressure-sensitive adhesive (PSA) tape having good workability. The bicycle rim PSA tape is a pressure sensitive adhesive sheet used for sealing a spoke hole in a bicycle rim; includes a support substrate, and a PSA layer on one surface of the support substrate; has a peel strength of 2 N/20 mm or more, as attached onto an aluminum plate as an adherend for 10 seconds and then measured under conditions at a tensile rate of 300 mm/min and a peel angle of 180°, under a temperature condition of 0°C; and has a shear adhesive strength of 200 N/400 mm$^2$ or more, as measured with employing an aluminum plate as an adherend under a temperature condition of 0°C.

FIG.6

**Description**

[Technical Field]

The present invention relates to a pressure-sensitive adhesive (PSA) sheet used for a bicycle rim. The application claims priority to Japanese Patent Application No. 2021-95920 filed on June 8, 2021, the entire contents of which are incorporated herein by reference.

[Background Art]

A bicycle wheel typically has a configuration including a hub in the center of the wheel, an annular rim supporting the outer circumferential part of the wheel, and a plurality of spokes connecting the annular rim to the central hub. The spokes basically extend radially from the hub and are joined to the rim, and the rim has through-holes for attaching the spokes. These holes to attach the spokes in the rim are commonly called spoke holes.

On an outer circumference of the annular rim, a tire is mounted. In such a tired wheel, the tire has a hollow structure inside. Generally, a rubber tire tube is placed in the hollow part of the bicycle tire, and air is filled and sealed in the tire tube, thereby forming a pneumatic tire. On the other hand, a tire having no tire tube in the hollow part, a so-called tubeless tire, is also practically used. In a bicycle having a tubeless tire, air is filled directly into the hollow part of the tire in the tired wheel, thereby forming a pneumatic tire. A tubeless tired wheel is thus required to have high airtightness. One of technical references relating to these technologies can be Patent Document 1.

[Citation List]

[Patent Literature]

[Patent Document 1] Japanese Patent Application Publication No.2004-75044

[Summary of Invention]

[Technical Problem]

For improving airtightness of a tubeless tired wheel, a seal structure to seal a spoke hole in a rim is required. Likewise, in a bicycle with a tire employing a tire tube (hereinafter referred to as a tube-mounted tire), difference in height around a spoke hole in a rim can also cause breakage of a tire tube during running of the bicycle. Thus, in either type of bicycle, it is common that before a tire is mounted on a rim, a PSA sheet having a width at least wider than the diameter of a spoke hole is wrapped around an outer circumference of the rim including a spoke-joining area, thereby sealing the spoke hole in the rim.

Typically, in an operation of wrapping a PSA sheet around an outer circumference of a rim, a PSA sheet wound in a roll is a little unrolled, followed by adhering and fixing an end of the PSA sheet to a certain point (starting point) on the outer circumference of the rim, and then the PSA sheet is wrapped around the outer circumference of the rim while being further unrolled. In this operation, when adhesive strength cannot bear tensile strength generated by unrolling of a PSA sheet and causes release of the end of the PSA sheet from the starting point during the operation, workability for wrapping the PSA sheet is significantly reduced. In particular, since a PSA sheet tends to have reduced adhesive strength under a low-temperature environment, it is a key problem to improve workability in an operation of wrapping a PSA sheet around a rim under a low-temperature environment.

In consideration of such circumstances, the present invention has an object to provide a bicycle rim PSA tape achieving good workability.

[Solution to Problem]

The specification provides a PSA sheet used for sealing a spoke hole in a bicycle rim. The PSA sheet includes a support substrate, and a PSA layer on one surface of the support substrate. The PSA sheet has a peel strength of 2 N/20 mm or more, as attached onto an aluminum plate as an adherend and then, 10 seconds after the attachment, measured under conditions at a tensile rate of 300 mm/min and a peel angle of 180°, under a temperature condition of 0°C. The PSA sheet also has a shear adhesive strength of 200 N/400 mm$^2$ or more, as measured with employing an aluminum plate as an adherend under a temperature condition of 0°C.

The PSA sheet having such a configuration has excellent adhesive strength just after attachment to an adherend; thus, at the start of wrapping around a bicycle rim, the PSA sheet exhibits good adherence to the bicycle rim even just after tight adhesion of an end of the PSA sheet to a starting point on an outer circumference of the rim. Moreover, the PSA sheet having such a configuration has excellent shear adhesive strength; thus, particularly even in an operation of wrapping with applying unrolling tensile strength along a bicycle rim, which has a curved surface, the PSA sheet easily withstands the tensile strength and exerts good adhesiveness. Accordingly, the PSA sheet having the configuration is likely to have excellent workability in an operation of wrapping the PSA sheet around a bicycle rim. Notably, workability tends to improve in performing the operation under a low-temperature environment.

In a preferable embodiment of the PSA sheet disclosed herein, the PSA layer has a storage modulus of $1.0 \times 10^5$ to $1.0 \times 10^6$ Pa at 0°C. When having a storage modulus at 0°C within the aforementioned range, the PSA layer is more likely to provide improved adhesiveness.

In a preferable embodiment of the PSA sheet disclosed herein, the PSA layer is an acrylic PSA layer containing an acrylic polymer. When having such a PSA layer, the PSA sheet exhibits good adhesiveness to a metal or a resin, and thus is preferred as a bicycle rim PSA sheet.

In a preferable embodiment of the PSA sheet disclosed herein, the PSA layer has a thickness of 30 μm or more to 75 μm or less. When the PSA layer has a thickness equal to or more than the lower limit value, the PSA sheet is more likely to exhibit a good adhesive property. By contrast, when the PSA layer has a thickness equal to or less than the upper limit value, the PSA sheet tends to exhibit excellent shear adhesive strength.

In a preferable embodiment of the PSA sheet disclosed herein, the support substrate is a resin film substrate. When having such a support substrate, the PSA sheet is more likely to have excellent conformability to a bump and a hole, and thus allows preferred sealing of a spoke hole in a rim.

In a preferable embodiment of the PSA sheet disclosed herein, the support substrate includes a polyester film as a base film. When having such a support substrate, the PSA sheet is more likely to serve as a PSA sheet that provides operability, processability, etc., as well as satisfies heat resistance to an extent required for a bicycle rim PSA sheet.

In a preferable embodiment of the PSA sheet disclosed herein, the support substrate further includes a colored layer on a surface of the base film facing the PSA layer. When having such a configuration, the PSA sheet includes a colored support substrate, and thus tends to provide a bicycle rim as an adherend with excellent concealing, design, etc. Furthermore, since the colored layer is placed on a surface of the base film facing the PSA layer, the colored layer is interposed and protected between a base film and a PSA layer, thereby preventing occurrence of an event such as elimination of a colorant due to e.g., friction on the surface of the PSA sheet, or loss of color in the PSA sheet.

In a preferable embodiment of the PSA sheet disclosed herein, the support substrate has a thickness of 60 μm or more to 100 μm or less. When the support substrate has a thickness equal to or more than the lower limit value, the PSA sheet is capable of withstanding pneumatic pressure to the PSA sheet, and further is more likely to preferably reduce difference in height due to an adherend. By contrast, it is preferred that the support substrate have a thickness equal to or less than the upper limit value in view of weight saving of a PSA sheet.

In a preferable embodiment, the PSA sheet disclosed herein is used for sealing a spoke hole in a bicycle rim for a tubeless tire. In a tubeless tired wheel, it is an important problem to improve airtightness in an assembly of a tire and a rim. Thus, it is particularly profitable to use the PSA sheet according to the present invention for an application of sealing a spoke hole in a bicycle rim for a tubeless tire.

It should be noted that appropriate combination of each of the aforementioned elements may also be encompassed in the scope of the invention claimed by the application.

[Brief Description of Drawings]

Fig. 1 is a plan view depicting an exemplary configuration of a tubeless tired wheel.
Fig. 2 is a cross-sectional view taken along the line II-II' in Fig. 1.
Fig. 3 is a plan view depicting an exemplary configuration of a tube-mounted tired wheel.
Fig. 4 is a cross-sectional view taken along the line IV-IV' in Fig. 3.
Fig. 5 is a schematic view for illustrating an operation of wrapping the PSA sheet around an outer circumference of a rim.
Fig. 6 is a cross-sectional view schematically depicted an exemplary configuration of the PSA sheet.

[Description of Embodiments]

Preferred embodiments of the present invention will now be described below. Matters necessary to practice the present invention other than those specifically referred to herein can be understood by a person skilled in the art based on teaching for practice of the invention described herein and common technical knowledge at the filing date. The present invention can be implemented based on the contents disclosed herein and common technical knowledge in the art. In the drawings below, members or sites producing the same effects may be described with a common reference numeral, and duplicated descriptions may be omitted or simplified. The embodiments described in the drawings are schematized for explicitly illustrating the present invention, and do not necessarily represent the accurate size or reduction scale of an actual product provided.

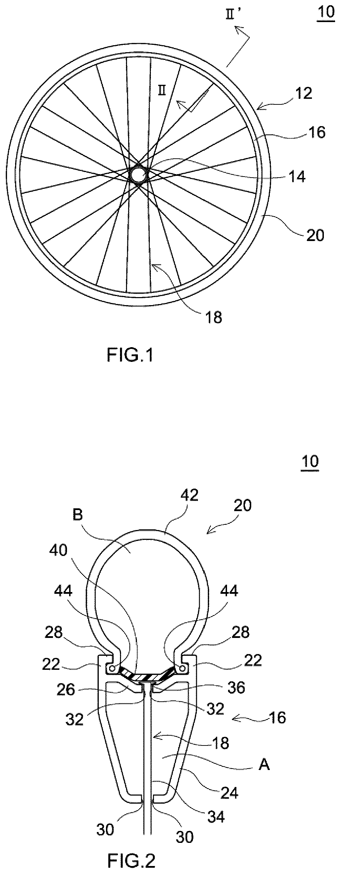

The PSA sheet disclosed herein is used for sealing a spoke hole in a bicycle rim. A configuration or structure of a bicycle rim to employ the PSA sheet is not particularly limited. With reference to Figs. 1 to 4, brief description will be made for representative configurations of a tired wheel including a bicycle rim, but these are only illustrative, and do not limit an embodiment, object, purpose, etc. of use of the PSA sheet disclosed herein.

Fig. 1 depicts an exemplary configuration of a tubeless tired wheel 10. A wheel 12 includes a central hub 14, an annular rim 16 supporting an outer circumferential part of the wheel 12, and a plurality of spokes 18 extending outward from the central hub 14 and joined to the annular rim 16. The spokes 18 are joined to the rim 16 at regular intervals on a circumference of the rim 16. Outside the annular rim 16 (i.e., the outside as viewed from the center of the wheel; the same applied hereinafter), a tire 20 is firmly disposed.

Fig. 2 is a cross-sectional view taken along the line II-II' in Fig. 1. The rim 16 includes a couple of side parts 22 facing each other, a U-shaped part 24 with each end part separately joined to a different side part 22, and a connective part 26 extending toward a wheel rotation axis (hereinafter also simply referred to as "toward an axis") between the two side parts 22. Each end of the connective part 26 is separately joined to a different side part 22, and forms an area A together with the U-shaped part 24. In addition, an end of the side part 22 has a hook part 28 to connect the tire 20. A central area toward an axis in the U-shaped part 24 has a spoke-containing opening 30 to contain the spoke 18. A central area toward an axis in the connective part 26 also has a spoke-joining opening (spoke hole) 32 to join to the spoke 18. The positions and number of the spoke holes 32 and the spoke-containing openings 30 are set so as to respectively correspond to the positions and number of the spokes 18; particularly, a plurality of the spoke holes 32 and the spoke-containing openings 30 are separately set circumferentially at regular intervals on the rim 16.

The spoke 18 includes a wire-shaped shaft part 34, and a head part 36 present on an outer end of the shaft part. The shaft part 34 is disposed so as to pass through the spoke-containing opening 30 and the spoke hole 32, and the head part 36 of the spoke 18 is disposed outside the connective part 26 of the rim 16. A method of joining the spoke 18 to the rim 16 is not particularly limited, and a conventional method can be used for the joining.

In the connective part 26 of the rim 16, a PSA sheet 40 is disposed so as to be wrapped around the whole outer circumference of the connective part 26 with a width to fully cover at least the spoke hole 32 and the head part 36 of the spoke 18. Such positioning of the PSA sheet 40 causes a spoke-joining area including the spoke hole 32 of the rim 16 to have a seal structure.

The tire 20 includes an annular tire part 42 placed outside, and a bead part 44 that is an end of the annular tire part 42 and joins to the rim 16. The bead part 44 of the tire 20 is fitted to the hook part 28 of the rim 16. The annular tire part 42 of the tire 20 forms a hollow area B together with the side parts 22 and the connective part 26 of the rim 16. The tire 20 depicted in Fig. 2 is a tubeless tire, and the hollow area B is thus filled with air. In the embodiment, the PSA sheet 40 preferably seals the spoke hole 32 of the rim 16, and thus provides the hollow area B with excellent airtightness.

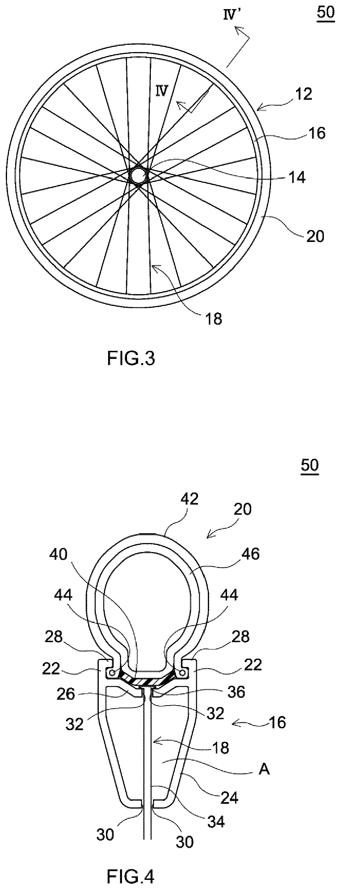

Fig. 3 depicts an embodiment of a tube-mounted tired wheel 50. The base configuration of the tired wheel 50 depicted in Fig. 3 is the same as the base configuration of the tubeless tired wheel 10 depicted in Fig. 1, and description thereof is thus omitted. Fig. 4 is a cross-sectional view taken along the line IV-IV' in Fig. 3. The configuration of the rim 16, the spoke 18, and the tire 20 depicted in Fig. 4 is the same as the configuration of each member depicted in Fig. 2. As depicted in Fig. 4, the annular tire part 42 of the tire 20 and the side parts 22 and the connective part 26 of the rim 16 form an area that includes a tube 46 having an annular hollow structure inside which air is filled. In the embodiment, the PSA sheet 40 preferably seals the spoke hole 32 of the rim 16, and thus tends to reduce difference in height due to the spoke hole 32, the head part 36 of the spoke 18, etc. With such a configuration, the tired wheel 50 facilitates prevention of breakage of the tire tube 46 during running of a bicycle.

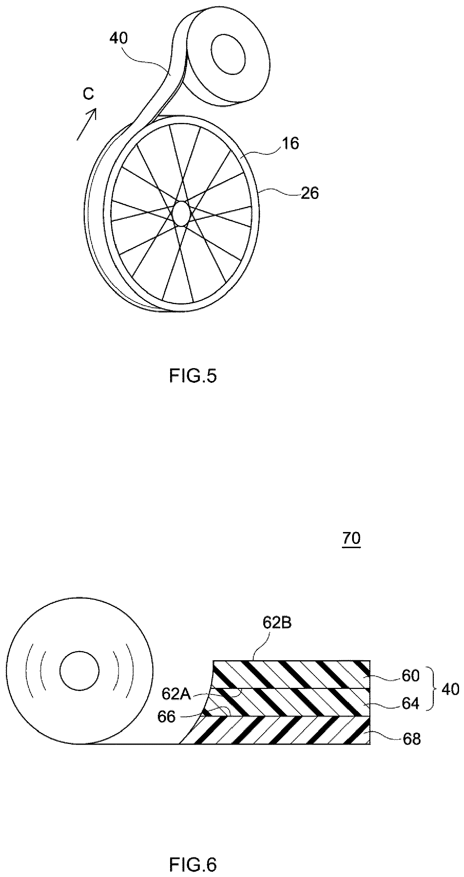

Next, with reference to Fig. 5, description will be made for an exemplary operation of wrapping the PSA sheet 40 disclosed herein around the rim 16. In an operation of wrapping around the rim 16, the PSA sheet 40 is typically used in a rolled form winding in a roll shape. The rolled PSA sheet 40 is a little unrolled, and an end of the PSA sheet 40 is pulled out and tightly adhered in an adhesive face of the end to a certain area (starting point) on an outer circumference of the rim connective part 26. As appropriate, an operator applies suitable load with one's finger via the PSA sheet 40 onto the end tightly adhered to the starting point on the rim 16. Then, the PSA sheet 40 is wrapped around and fixed to the outer circumference of the rim connective part 26 while being further unrolled. During the operation, the PSA sheet 40 is wrapped with receiving a constant tensile strength in a direction indicated as the arrow C depicted in Fig. 5, in order to tightly adhere the PSA sheet 40 evenly along the outer circumference of the rim, which has a curved surface, without generating a wrinkle. The number of winding of the PSA sheet 40 on an outer circumference of the rim 16 is not particularly limited, but the sheet is typically wound around an outer circumference of the rim 16 about once to twice.

(Immediate Post-attachment Peel Strength)

The PSA sheet disclosed herein has excellent adhesive strength just after attachment to an adherend. In an operation of wrapping around a rim, such a PSA sheet allows an end of the PSA sheet to be preferably fixed to the rim upon tight adherence of the end of the PSA sheet to a starting point on the rim, and thereby improves workability of the operation of wrapping. The PSA sheet disclosed herein particularly has excellent, immediate post-attachment adhesive strength to an adherend under a low-temperature environment. Such a PSA sheet facilitates improvement in workability even in an operation of wrapping around a rim under a low-temperature environment (e.g., under an outdoor environment in winter).

The PSA sheet disclosed herein has a peel strength (hereinafter also referred to as low-temperature immediate post-attachment peel strength So) of 2 N/20 mm or more, as attached onto an aluminum plate as an adherend for 10 seconds and then measured under conditions at a tensile rate of 300 mm/min and a peel angle of 180°, under a temperature condition of 0°C. When exhibiting such a low-temperature immediate post-attachment peel strength So, the PSA sheet facilitates improvement in workability in an operation of wrapping around a rim (e.g., an operation of wrapping around a rim under a low-temperature environment). In view of further improving workability, the low-temperature immediate post-attachment peel strength So is more preferably 3 N/20 mm or more, even more preferably 4 N/20 mm or more, and particularly preferably 4.5 N/20 mm or more. The upper limit of the low-temperature immediate post-attachment peel strength So is not particularly limited, but may be, in view of balancing with another adhesive property, 10 N/20 mm or less, 8 N/20 mm or less, or 7 N/20 mm or less. The low-temperature immediate post-attachment peel strength So is particularly measured by the method in the examples described later.

(Shear Adhesive Strength)

Furthermore, the PSA sheet disclosed herein has excellent shear adhesive strength. In an operation of wrapping around a rim, such a PSA sheet exhibits resistance to a force in a tensile direction (i.e., shear direction) and thus less peel-off even in attaching the PSA sheet with pulling the PSA sheet in a sheet-face direction so as to provide tight adherence to the rim, and therefore improves workability in a wrapping operation. The PSA sheet disclosed herein particularly has excellent shear adhesive strength under a low-temperature environment. Such a PSA sheet facilitates improvement in workability even in an operation of wrapping around a rim under a low-temperature environment (e.g., under an outdoor environment in winter).

The PSA sheet disclosed herein has a shear adhesive strength (hereinafter also referred to as low-temperature shear adhesive strength Po) of 200 N/400 mm$^2$ or more, as measured with employing an aluminum plate as an adherend under a temperature condition of 0°C. When having such a low-temperature shear adhesive strength Po, the PSA sheet facilitates improving workability in an operation of wrapping around a rim (e.g., an operation of wrapping around a rim under a low-temperature environment). In view of further improving workability, the low-temperature shear adhesive strength Po is more preferably 210 N/400 mm$^2$ or more, and even more preferably 220 N/400 mm$^2$ or more, and may be 250 N/400 mm$^2$ or more. The upper limit of the low-temperature shear adhesive strength Po is not particularly limited, but may be, in view of balancing with another adhesive property, 400 N/400 mm$^2$ or less, 350 N/400 mm$^2$ or less, or 300 N/400 mm$^2$ or less. The low-temperature shear adhesive strength Po can be measured, in particular, by the method shown in the examples described later.

(Configuration of PSA Sheet)

Fig. 6 depicts an exemplary configuration in a preferable embodiment of the PSA sheet disclosed herein. The PSA sheet 40 is configured as a substrate-mounted one-sided PSA sheet 40, which includes a sheet-shaped support substrate (e.g., resin film) 60 having a first face 62A and a second face 62B, a PSA layer 64 firmly disposed on the first face 62A side. The PSA layer 64 includes an adhesive face 66 forming one surface of the PSA sheet 40. The PSA sheet 40 before use can represent a component of a release liner-mounted PSA sheet 70, where the adhesive face 66 of the PSA layer 64 is protected by a release liner 68 having a release face at least on a side facing the PSA layer 64, as depicted in Fig. 6. The release liner-mounted PSA sheet 70 may be configured as a release liner-mounted PSA sheet having a roll form as depicted in Fig. 6. In an example depicted in Fig. 6, the release liner-mounted PSA sheet 70 is configured by spirally winding with making the release liner 68 face outward, but a direction of the winding is not limited. A release liner-mounted PSA sheet in a roll form may be configured by rolling the release liner-mounted PSA sheet with making the release liner 68 face inward.

The concept of the PSA sheet described above can encompass items referred to as a PSA tape, a PSA film, a PSA label, etc. The PSA sheet may have a roll shape or a leaflet shape, or may be processed into a suitable shape by cutting, punching, etc. corresponding to an application or an aspect of use. When the PSA sheet includes a PSA layer stacked on one side of a support substrate, the PSA layer may typically be formed continuously, but is not limited thereto, and may be formed in a regular pattern such as dots or stripes, or in a random pattern.

(Base Polymer)

The PSA sheet disclosed herein includes a PSA layer. In the art disclosed herein, the type of PSA forming the PSA layer is not particularly limited. The PSA may contain, as a base polymer, one, two or more species among various rubber polymers known in the field of PSAs, such as acrylic polymer, rubber-based polymer, polyester-based polymer, urethane-based polymer, polyether-based polymer, silicone-based polymer, polyamide-based polymer, and fluoropolymer. In view of adhesive performance, cost, etc., a PSA containing an acrylic polymer or a rubber-based polymer as a base polymer is preferably employed. In particular, preferred is a PSA containing an acrylic polymer as a base polymer (acrylic PSA). In the following, description will be made mainly for a PSA sheet having a PSA layer formed of an acrylic PSA, i.e., an acrylic PSA layer, but is not intended to limit the PSA layer in the PSA sheet disclosed herein to those formed of an acrylic PSA.

The term "base polymer" of a PSA refers to a rubber polymer that is a main component in the PSA. The rubber polymer refers to a polymer that exhibits rubber elasticity around room temperature. The term "main component" herein refers to a component accounting for more than 50% by weight unless otherwise specified.

The term "acrylic polymer" refers to a polymer that includes, as a monomeric unit forming the polymer, a monomeric unit derived from a monomer having at least one (meth)acryloyl group per molecule. Hereinafter, a monomer having at least one (meth)acryloyl group per molecule is also referred to as an "acrylic monomer." The acrylic polymer herein is thus defined as a polymer that includes a monomeric unit derived from an acrylic monomer. Typical examples of the acrylic polymer include an acrylic polymer containing an acrylic monomer in a proportion of more than 50 % by weight of all monomer components used in synthesis of the acrylic polymer.

The term "(meth)acryloyl" is meant to be inclusive of acryloyl and methacryloyl. Likewise, the term "(meth)acrylate" is meant to be inclusive of acrylate and methacrylate, and "(meth)acryl" is meant to be inclusive of acryl and methacryl, respectively.

An example of the acrylic polymer is preferably a polymer formed from a monomeric raw material that contains an alkyl (meth)acrylate as a major monomer and may further contain an auxiliary monomer copolymerizable with the major monomer. A major monomer herein refers to a component that accounts for more than 50% by weight of monomer composition of the monomeric raw material.

As the alkyl(meth)acrylate, a compound represented by the following formula (1) can be preferably used:

$$CH_2=C(R^1) COOR^2 \qquad (1)$$

wherein in the formula (1), $R^1$ is a hydrogen atom or a methyl group, and $R^2$ is a linear alkyl group having 1 to 20 carbon atoms. Hereinafter, such a range of carbon atoms may be represented by "$C_{1-20}$" In view of storage elastic modulus of the PSA and the like, a main monomer is suitably an alkyl (meth)acrylate in which $R^2$ is a linear $C_{1-14}$ (e.g. $C_{2-10}$, typically $C_{4-8}$) alkyl group. In view of adhesive properties, a main monomer is preferably an alkyl acrylate in which $R^1$ is a hydrogen atom and $R^2$ is a linear $C_{4-8}$ alkyl group (hereinafter also simply referred to as a $C_{4-8}$ alkyl acrylate).

Examples of an alkyl(meth)acrylate having $R^2$ representing a $C_{1-20}$ linear alkyl group include methyl(meth)acrylate, ethyl(meth)acrylate, propyl(meth)acrylate, isopropyl(meth)acrylate, n-butyl(meth)acrylate, isobutyl(meth)acrylate, s-butyl(meth)acrylate, pentyl(meth)acrylate, isopentyl(meth)acrylate, hexyl(meth)acrylate, heptyl(meth)acrylate, 2-ethylhexyl(meth)acrylate, octyl(meth)acrylate, isooctyl(meth)acrylate, nonyl(meth)acrylate, isononyl(meth)acrylate, decyl(meth)acrylate, isodecyl(meth)acrylate, undecyl(meth)acrylate, lauryl(meth)acrylate, tridecyl(meth)acrylate, tetradecyl(meth)acrylate, pentadecyl(meth)acrylate, hexadecyl(meth)acrylate, heptadecyl(meth)acrylate, octadecyl(meth)acrylate, nonadecyl(meth)acrylate, and eicosyl(meth)acrylate. These alkyl(meth)acrylates can be used alone as one species or in combination of two or more species. Preferable example of alkyl(meth)acrylate include *n*-butylacrylate (BA) and 2-ethylhexylacrylate (2EHA).

The proportion of an alkyl(meth)acrylate in monomer components forming the acrylic polymer is not particularly limited. The proportion of an alkyl (meth)acrylate in the monomer components can be approximately 80% by weight or more (typically 80 to 99.8% by weight) and is preferably 85% by weight or more (e.g., 85 to 99.5% by weight). The proportion of an alkyl(meth)acrylate in the monomer components may be 90% by weight or more (e.g., 90 to 99% by weight).

The art disclosed herein can be preferably implemented in an embodiment in which the monomer components contain 50% or more by weight of a $C_{1-4}$ alkyl (meth)acrylate. The proportion of $C_{1-4}$ alkyl (meth)acrylate in the monomer components may be 70% by weight or more, or may be 85% by weight or more (e.g. 90% by weight or more). On the other hand, in view of cohesive strength, etc., the proportion of a $C_{1-4}$ alkyl (meth)acrylate in the monomer components is usually suitably 99.5% by weight or less, and may be 98% by weight or less (e.g., less than 97% by weight).

The art disclosed herein can be preferably implemented in an embodiment in which the monomer components contain 50% or more by weight of $C_{2-4}$ alkyl (meth)acrylate (e.g., 70% by weight or more, 85% by weight or more, or 90% by weight or more). Specific examples of the $C_{2-4}$ alkyl acrylate include ethyl acrylate, propyl acrylate, isopropyl acrylate, n-butyl acrylate (BA), isobutyl acrylate, s-butyl acrylate, and t-butyl acrylate. The $C_{2-4}$ alkyl acrylate may be used alone as one species or in combination of two or more species. Such an embodiment facilitates providing a PSA sheet with highly tight adherence to an adherend. In particular, a preferable embodiment is an embodiment in which the monomer components contains more than 50% by weight of BA (e.g., 70% by weight or more, 85% by weight or more, or 90% by weight or more). In view of providing good cohesive strength, the proportion of the $C_{2-4}$ alkyl(meth)acrylate in the monomer components is usually, suitably 99.5% by weight or less, and may be 98% by weight or less (e.g., less than 97% by weight).

Another embodiment can be implemented as an embodiment in which the monomer components contains 50% by weight or more (e.g., 70% by weight or more, 85% by weight or more, or 90% by weight or more) of a $C_{5-20}$ alkyl(meth)acrylate. The $C_{5-20}$ alkyl(meth)acrylate is preferably a $C_{6-14}$ alkyl(meth)acrylate. In an embodiment, $C_{6-10}$ alkyl acrylate(e.g., $C_{8-10}$ alkyl acrylate) can be preferably employed.

As a monomer component forming the acrylic polymer, another monomer copolymerizable with an alkyl(meth)acrylate (also referred to as "copolymerizable monomer component") may be used as far as an alkyl(meth)acrylate is contained as a main component.

The copolymerizable monomer component can serve for introducing a crosslinking point into the acrylic polymer, improving cohesive strength of the acrylic polymer, etc. Such a copolymerizable monomer can be used alone as one species or in combination of two or more species.

More particularly, as a copolymerizable monomer component for introducing a crosslinking point into the acrylic polymer, various functional group-containing monomer components (typically, a thermally-crosslinking functional group-containing monomer component for introducing into the acrylic polymer a crosslinking point to be thermally crosslinked) can be used. Use of such a functional group-containing monomer component can improve adhesion strength to an adherend. Such a functional group-containing monomer component is not particularly limited as long as it is a monomer component that is copolymerizable with an alkyl(meth)acrylate and potentially provides a functional group to be serve as a crosslinking point. For example, a functional group-containing monomer component(s) such as a carboxyl group-containing monomer, a hydroxy group-containing monomer, an amide group-containing monomer, an amino group-containing monomer, an epoxy group-containing monomer, a cyano group-containing monomer, a keto group-containing monomer, a monomer having a nitrogen atom-containing ring, and an alkoxysilyl group-containing monomer can be used alone as one species or in combination of two or more species.

Examples of the carboxy group-containing monomer include ethylenic unsaturated monocarboxylic acids such as acrylic acid, methacrylic acid, and crotonic acid; and ethylenic unsaturated dicarboxylic acids such as maleic acid, itaconic acid, and citraconic acid, as well as anhydrides thereof (maleic acid anhydride, itaconic acid anhydride, etc.)

Examples of the hydroxy group-containing monomer include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate and 4-hydoxybutyl(meth)acrylate; and unsaturated alcohols such as vinyl alcohol and allyl alcohol.

Examples of the amide group-containing monomer include (meth)acrylamide, N,N-dimethyl(meth)acrylamide, N-butyl(meth)acrylamide, N-methylol(meth)acrylamide, N-methylolpropane(meth)acrylamide, N-methoxymethyl(meth)acrylamide, and N-butoxymethyl(meth)acrylamide.

Examples of the amino group-containing monomer include aminoethyl (meth)acrylate, N,N-dimethylaminoethyl (meth)acrylate, and t-butylaminoethyl (meth)acrylate.

Examples of the epoxy group-containing monomer include glycidyl (meth)acrylate, methylglycidyl (meth)acrylate, and allyl glycidyl ether.

Examples of the cyano group-containing monomer include acrylonitrile and methacrylonitrile.

Examples of the keto group-containing monomer include diacetone (meth)acrylamide, diacetone (meth)acrylate, vinyl methyl ketone, vinyl ethyl ketone, allyl acetoacetate, and vinyl acetoacetate.

Examples of the monomer having a nitrogen atom-containing ring include N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, and N-(meth)acryloyl morpholine.

Examples of the alkoxysilyl group-containing monomer include 3-(meth)acryloxypropyltrimethoxysilane, 3-(meth)acryloxypropyltriethoxysilane, 3-acryloxypropyltriethoxysilane, 3-(meth)acryloxypropylmethyldimethoxysilane, and 3-(meth)acryloxypropylmethyldiethoxysilane.

Among these functional group-containing monomer components, one, two or more species can be selected from the carboxyl group-containing monomers or acid anhydride thereof and preferably used. Substantially all of the functional group-containing monomer components may be carboxyl group-containing monomers. Particularly preferred examples of the carboxyl group-containing monomer include acrylic acid and methacrylic acid. Either one of these may be used alone, or acrylic acid and methacrylic acid can be used in combination with any proportion.

The functional group-containing monomer component is preferably used in a range of e.g., approximately 10 parts by weight or less (e.g., approximately 0.1 to 10 parts by weight, preferably approximately 1.5 to 3.5 parts by weight) relative to 100 parts by weight of alkyl(meth)acrylate. An excess amount of the functional group-containing monomer components can result in excessive cohesive force, leading to tendency to reduce adhesive property (e.g., adhesion strength).

Monomer components forming the acrylic polymer may contain another copolymerization component other than the functional group-containing monomer described above for the purpose of improving cohesive strength or the like. Examples of the other copolymerization component include vinyl ester-based monomers such as vinyl acetate, vinyl propionate, and vinyl laurate; aromatic vinyl compounds such as styrene, substituted styrene (such as α-methylstyrene), and vinyl toluene; cycloalkyl (meth)acrylates such as cyclohexyl (meth)acrylate, cyclopentyl (meth)acrylate, and isobomyl (meth)acrylate; aromatic ring-containing (meth)acrylates such as aryl (meth)acrylates (e.g. phenyl (meth)acrylate), aryloxyalkyl (meth)acrylates (e.g. phenoxyethyl (meth)acrylate), and arylalkyl (meth)acrylates (e.g. benzyl (meth)acrylate); olefinic monomers such as ethylene, propylene, isoprene, butadiene, and isobutylene; chlorine-containing monomers such as vinyl chloride and vinylidene chloride; isocyanate group-containing monomers such as 2-(meth)acryloyloxyethyl isocyanate; alkoxy group-containing monomers such as methoxyethyl (meth)acrylate and ethoxyethyl (meth)acrylate; vinyl ether-based monomers such as methyl vinyl ether and ethyl vinyl ether; and polyfunctional monomers having two or more (e.g. three or more) polymerizable functional groups (e.g. (meth)acryloyl groups) per molecule, such as 1,6-hexanediol di(meth)acrylate and trimethylolpropane tri(meth)acrylate.

The amount of such another copolymerization component is only required to be appropriately selected corresponding to a purpose and use and is not particularly limited. In view of suitably exerting an effect of use thereof, the amount is usually, suitably 0.05 % by weight or more, and may be 0.5 % by weight or more. In view of facilitating balance of adhesive performance, the content of the other copolymerization component in the monomer components is usually, suitably 20 % by weight or less, and may be 10 % by weight or less (e.g. 5 % by weight or less). The art disclosed herein can also be preferably implemented in an embodiment in which the monomer components contain substantially no other copolymerizable component. Herein, the monomer components containing substantially no other copolymerizable monomer means that no other copolymerizable monomer is used at least intentionally; another copolymerizable monomer component may be allowed to be unintentionally contained e.g., in an amount of about 0.0 1% by weight or less.

Copolymerization composition of the acrylic polymer is suitably designed so as to provide the polymer with a glass transition temperature (Tg) of about -15°C or lower (e.g. about -70°C or higher and -15°C or lower). The Tg of the acrylic polymer herein refers to a Tg determined by the Fox equation based on the composition of the monomer components used in synthesis of the polymer. As shown below, the Fox equation is a relational expression of the Tg of a copolymer and the glass transition temperature Tgi of a homopolymer produced by homopolymerization of each monomer species forming the copolymer.

$$1/Tg = \Sigma(Wi/Tgi)$$

In the Fox equation described above, Tg represents the glass transition temperature (unit: K) of the copolymer, Wi represents the weight fraction (copolymerization ratio by weight) of a monomer i in the copolymer, and Tgi represents the glass transition temperature (unit: K) of the homopolymer of the monomer i.

As for the glass transition temperatures of the homopolymer used for calculation of Tg, a value disclosed in a known reference is used. For instance, the monomers listed below employs the following values as the glass transition temperatures of their corresponding homopolymers.

| | |
|---|---|
| 2-ethylhexylacrylate | -70°C |
| isononyl acrylate | -60°C |
| *n*-butylacrylate | -55°C |
| ethyl acrylate | -22°C |
| methyl acrylate | 8°C |
| methyl methacrylate | 105°C |
| 2-hydoxyethylacrylate | -15°C |
| 4-hydoxybutylacrylate | -40°C |
| vinyl acetate | 32°C |
| acrylic acid | 106°C |
| methacrylic acid | 228°C |

With respect to glass transition temperatures of homopolymers of monomers other than those exemplified above, the numerical values given in "Polymer Handbook" (3rd edition, John Wiley & Sons, Inc., Year 1989) are used. When the Polymer Handbook provides several values for a certain monomer, the highest value is employed. When the Polymer Handbook provides no value, a value derived by the measuring method described in Japanese Patent Application Publication No. 2007-51271 is used.

Without no particular limitation, in view of tight adherence to an adherend, the Tg of the acrylic polymer is advantageously approximately -25°C or lower, preferably approximately -35°C or lower, and more preferably approximately -40°C or lower. In an embodiment, in view of cohesive strength, the Tg of the acrylic polymer may be, e.g., approximately -70°C or higher, approximately -65°C or higher, or approximately -60°C or higher. The art disclosed herein can be preferably implemented in an embodiment where the Tg of the acrylic polymer is approximately -70°C or higher to -35°C or lower (e.g., approximately -60°C or higher to -40°C or lower). The Tg of the acrylic polymer can be adjusted by appropriately changing monomer composition (i.e., the type and the ratio of amounts of monomers used for synthesizing the polymer).

A method of obtaining the acrylic polymer is not particularly limited. Various polymerization methods known as synthetic techniques for acrylic polymers can be appropriately employed, such as solution polymerization, emulsion polymerization, bulk polymerization, suspension polymerization, and photopolymerization. For example, solution polymerization can be preferably employed. The polymerization temperature in solution polymerization can be appropriately selected corresponding to the types of monomer and solvent to be used, the type of polymerization initiator, or the like, and can be, e.g., about 20°C to 170°C (typically, about 40°C to 140°C).

A solvent used in solution polymerization (polymerization solvent) can be appropriately selected from conventionally known organic solvents. For instance, any one species of solvent or a mixture of two or more species of solvent can be selected and used among aromatic compounds (typically aromatic hydrocarbons) such as toluene; acetic acid esters such as ethyl acetate; aliphatic or alicyclic hydrocarbons such as hexane and cyclohexane; halogenated alkanes such as 1,2-dichloroethane; lower alcohols (e.g. monohydric alcohols with one to four carbon atoms) such as isopropyl alcohol; ethers such as *tert*-butyl methyl ether; and ketones such as methyl ethyl ketone.

The initiator used for polymerization can be appropriately selected corresponding to the type of polymerization method from conventionally known polymerization initiators. For example, one, two or more species of azo-based polymerization initiators such as 2,2'-azobisisobutyronitrile (AIBN) can be preferably used. Other examples of the polymerization initiator include persulfates such as potassium persulfate; peroxide-based initiators such as benzoyl peroxide and hydrogen peroxide; substituted ethane-based initiators such as phenyl-substituted ethane; and aromatic carbonyl compounds. Still other examples of the polymerization initiator include redox-based initiators based on a combination of a peroxide and a reducing agent. Such a polymerization initiator can be used alone as one species or in combination of two or more species. The amount of the polymerization initiator is only required to be a common amount, and can be selected, e.g., in the range of about 0.005 to 1 part by weight (typically, approximately 0.01 to 1 part by weight) to 100 parts by weight of monomer components.

The solution polymerization yields a polymerization reaction liquid in which the acrylic polymer is dissolved in an organic solvent. The PSA layer in the art disclosed herein may be formed from a PSA composition containing this polymerization reaction liquid or an acrylic polymer solution produced by subjecting the reaction liquid to a suitable work-up. As the acrylic polymer solution, the polymerization reaction liquid can be used after adjusted to suitable viscosity (concentration) as necessary. Alternatively, an acrylic polymer solution may be prepared and used by synthesizing an acrylic polymer by a polymerization method other than solution polymerization (e.g., emulsion polymerization, photopolymerization, and bulk polymerization) and dissolving the acrylic polymer in an organic solvent.

The weight-average molecular weight (Mw) of the base polymer (preferably acrylic polymer) in the art disclosed herein is not particularly limited, and may fall, e.g., in the range of approximately $5 \times 10^4$ to $500 \times 10^4$. In view of the adhesive performance, the Mw of the base polymer preferably falls in the range of about $10 \times 10^4$ to $200 \times 10^4$ (more preferably approximately $20 \times 10^4$ to $150 \times 10^4$, and typically approximately $30 \times 10^4$ to $100 \times 10^4$). Use of a base polymer having a higher Mw tends to provide better impact resistance with ease by leveraging cohesive strength of a polymer itself. Mw herein refers to a value based on polystyrene standards by GPC (gel permeation chromatography). As a GPC apparatus, for example, the model named "HLC-8120 GPC" (column: TSK gel SuperHM-H/H4000/H3000/H2000, manufactured by Tosoh Corporation) can be used. The same measuring method is also used in the examples described later.

The storage modulus of the base polymer (preferably acrylic polymer) in the art disclosed herein is not particularly limited. In a preferable embodiment, the storage modulus of the base polymer at 0°C is $1.0 \times 10^4$ Pa or more, more preferably $5.0 \times 10^4$ Pa or more, even more preferably $1.0 \times 10^5$ Pa or more, and particularly preferably $1.2 \times 10^5$ Pa or more. The upper limit of the storage modulus of the base polymer at 0°C is not particularly limited, but is preferably $1.5 \times 10^6$ Pa or less, more preferably $1.0 \times 10^6$ Pa or less, even more preferably $8.0 \times 10^5$ Pa or less, and particularly preferably $7.5 \times 10^5$ Pa or less. When the storage modulus of the base polymer at 0°C falls in the aforementioned range, the PSA layer tends to have improved adhesiveness.

In the art disclosed herein, the storage modulus of the base polymer at 0°C can be determined by measurement of dynamic viscoelasticity. In particular, it can be measured in the same manner as the method for the storage modulus of a PSA layer at 0°C described later.

(Tackifier Resin)

The PSA layer in the art disclosed herein can contain a tackifier resin. This can increase peel strength of the PSA sheet. As the tackifier resin, one, two or more species can be selected and used among various known tackifier resins such as a phenolic tackifier resin, a terpene-based tackifier resin, a modified terpene-based tackifier resin, a rosin-based tackifier resin, a hydrocarbon-based tackifier resin, an epoxy-based tackifier resin, a polyamide-based tackifier resin, an elastomer-based tackifier resin, and a ketone-based tackifier resin.

Examples of the phenolic tackifier resin include terpene phenolic resins, hydrogenated terpene phenolic resins, alkylphenolic resins, and rosin phenolic resins.

The term "terpene phenolic resin" refers to a polymer containing a terpene residue and a phenol residue, and represents a concept encompassing both a copolymer of a terpene species and a phenol compound (terpene-phenol copolymer resin) and a phenol-modified homopolymer or copolymer of a terpene species (phenol-modified terpene resin). Preferable examples of terpene species forming such terpene phenolic resins include monoterpenes such as $\alpha$-pinene, $\beta$-pinene, and limonene (including d-form, l-form and d/1 form (dipentene)). The hydrogenated terpene phenolic resin refers to a terpene phenolic resin having a structure derived by hydrogenating such a terpene phenolic resin. Such a resin is also sometimes referred to as a hydrogen-added terpene phenolic resin.

The alkylphenolic resin is a resin (oily phenolic resin) derived from alkylphenol and formaldehyde. Examples of the alkylphenol resin include novolac type resins and resole type resins.

A rosin phenolic resin is typically a phenol-modified product of rosins or various rosin derivatives thereof (including rosin esters, unsaturated fatty acid-modified rosins, and unsaturated fatty acid-modified rosin esters) described later. Examples of the rosin phenolic resin include rosin phenolic resins derived by a method of adding phenol to a rosin species or one of various rosin derivatives thereof with an acid catalyst and forwarding thermal polymerization.

Examples of the terpene-based tackifier resin include polymers of terpenes (typically monoterpenes) such as $\alpha$-pinene, $\beta$-pinene, d-limonene, l-limonene, and dipentene. The polymer may be a homopolymer of one terpene species or a copolymer of two or more species of terpenes. Examples of the homopolymers of one terpene species include an $\alpha$-pinene polymer, a $\beta$-pinene polymer, and a dipentene polymer. Examples of the modified terpene resin include modifications of the terpene resin described above. Specific examples include styrene-modified terpene resins and hydrogenated terpene resins.

The concept of the rosin-based tackifier resin herein encompasses both rosins and rosin derivative resins. Examples of the rosins include unmodified rosins (raw rosins) such as gum rosin, wood rosin, and tall oil rosin; and modified rosins derived by modifying the unmodified rosins by hydrogenation, disproportionation, polymerization, and the like (hydrogenated rosins, disproportionated rosins, polymerized rosins, and other chemically modified rosins).

The rosin derivative resin is typically a derivative of the rosin as described above. The concept of the rosin-based resin herein encompasses derivatives of unmodified rosins and derivatives of modified rosins (including hydrogenated rosins, disproportionated rosins and polymerized rosins). Examples thereof include rosin esters such as unmodified rosin esters which are esters of unmodified rosins and alcohols, and modified rosin esters which are esters of modified rosins and alcohols; unsaturated fatty acid-modified rosins derived by modification of rosins with unsaturated fatty acids; unsaturated fatty acid-modified rosin esters derived by modification of rosin esters with unsaturated fatty acids; rosin alcohols derived by reduction treatment of carboxy groups of rosins or various rosin derivatives thereof (including rosin esters, unsaturated fatty acid-modified rosins and unsaturated fatty acid-modified rosin esters); and metal salts of rosins or various rosin derivatives thereof. Specific examples of the rosin esters include methyl esters, triethylene glycol esters, glycerin esters, and pentaerythritol esters of unmodified rosins or modified rosins (hydrogenated rosins, disproportionated rosins, polymerized rosins, etc.)

Examples of the hydrocarbon-based tackifier resin include various hydrocarbon-based resins such as aliphatic hydrocarbon resins, aromatic hydrocarbon resins, aliphatic cyclic hydrocarbon resins, aliphatic/aromatic petroleum resins (styrene-olefin copolymers, etc.), aliphatic/alicyclic petroleum resins, hydrogenated hydrocarbon resin, coumarone resins, and coumarone indene resins.

The softening point of the tackifier resin is not particularly limited. In view of improving cohesive strength, in an embodiment, a tackifier resin having a softening point (softening temperature) of approximately 80°C or higher (preferably, about 100°C or higher) can be preferably employed. The art disclosed herein can be preferably implemented in an embodiment in which a tackifier resin having the softening point described above occupies more than 50% by weight (more preferably, more than 70% by weight, e.g., more than 90% by weight) based on the total amount of the tackifier resin as 100 % by weight in the PSA layer. The upper limit of the softening point of the tackifier resin is not particularly limited. In view of improving tight adhesion to an adherend, in an embodiment, a tackifier resin having a softening point of approximately 200°C or lower (more preferably approximately 180°C or lower) can be preferably used. The softening point of the tackifier resin can be measured based on a softening point test method (ring and ball method) prescribed in JIS K 2207.

When the PSA layer includes a tackifier resin, the amount of the tackifier resin is not particularly limited, and may be appropriately set in a range of, e.g., about 1 to 100 parts by weight relative to 100 parts by weight of the base polymer. In view of preferably exerting an effect to increase peel strength, the amount of the tackifier resin relative to 100 parts by weight of the base polymer (e.g. acrylic polymer) is usually, suitably 1 part by weight or more, and preferably 3 parts by weight or more. The upper limit of the tackifier resin is not particularly limited. In view of heat-resistant cohesive strength, the amount of the tackifier resin relative to 100 parts by weight of the base polymer (e.g. acrylic polymer) is usually, suitably 50 parts by weight or less, and may be 40 parts by weight or less, or 30 parts by weight or less.

(Crosslinking Agent)

In the art disclosed herein, the PSA composition used for forming the PSA layer may contain a crosslinking agent as necessary. The type of the crosslinking agent is not particularly limited and a suitable species can be selected and used from conventionally known crosslinking agents. Examples of the crosslinking agent include isocyanate-based crosslinking agents, epoxy-based crosslinking agents, oxazoline-based crosslinking agents, aziridine-based crosslinking agents, melamine-based crosslinking agents, peroxide-based crosslinking agents, urea-based crosslinking agents, metal alkoxide-based crosslinking agents, metal chelate-based crosslinking agents, metal salt-based crosslinking agents, carbodiimide-based crosslinking agents, hydrazine-based crosslinking agents, amine-based crosslinking agents, and silane coupling agents. The crosslinking agent can be used alone as one species or in combination of two or more species.

The total amount of a crosslinking agent is not particularly limited, and can be, e.g., approximately 10 parts by weight or less relative to 100 parts by weight of the base polymer (preferably an acrylic polymer) or selected from a range of preferably approximately 0.005 to 10 parts by weight, and more preferably approximately 0.01 to 5 parts by weight.

(Other Additives)

The PSA composition may contain, as necessary, various additives which are common in the field of PSA compositions, such as a leveling agent, a crosslinking aid, an anticorrosive, a plasticizer, a softener, an antistatic agent, an aging-preventing agent, an ultraviolet absorber, an antioxidant, and a light stabilizer. These various additives can be conventionally known species used by common methods and does not particularly characterize the present invention, and detailed description is thus omitted.

The PSA layer (a layer formed of a PSA) disclosed herein can be a PSA layer formed from an aqueous PSA composition, a solvent-based PSA composition, a hot-melt PSA composition, or an active energy ray-curable PSA composition. The aqueous PSA composition refers to a PSA composition containing a PSA (a PSA layer-forming component) in a solvent containing water as a major component (an aqueous solvent), and typically includes a so-called water-dispersed PSA composition (in which the PSA is at least partially dispersed in water) or the like. Further, the solvent-based PSA composition refers to a PSA composition containing a PSA in an organic solvent. In view of an adhesive property and the like, the art disclosed herein can be preferably implemented in an embodiment in which the PSA layer is formed from a solvent-based PSA composition.

(Formation of PSA Layer)

The PSA layer disclosed herein can be formed by a conventionally known method. For example, a direct method can be employed where a PSA composition is directly provided (typically, applied) to a substrate film as described earlier and allowed to dry to form a PSA layer. Alternatively, a transfer method can be employed where a PSA composition is provided to a releasable surface (release face) and allowed to dry to form a PSA layer on the surface, followed by transferring the PSA layer to a substrate film. In view of productivity, the transfer method is preferable. The release face to be used can be a surface of a release liner, the backside of a substrate film treated with a release agent, or the like. The PSA layer disclosed herein is typically formed continuously, but not limited to such a form, and may be a PSA layer formed in a regular pattern such as dots or stripes, or in a random pattern.

The PSA composition can be applied with a conventionally known coater such as a gravure roll coater, a die coater, or a bar coater. Alternatively, the PSA composition may be applied by immersion, curtain coating, or the like.

In view of accelerating a crosslinking reaction, improving production efficiency, and the like, the PSA composition is preferably dried under heating. The drying temperature can be, e.g., about 40°C to 150°C, and usually, preferably about 60°C to 130°C. After drying, the PSA composition can be subjected to aging for the purpose of adjusting migration of a component within the PSA layer, allowing a crosslinking reaction to proceed, reducing possible distortion in the PSA layer, etc.

The thickness of the PSA layer is not particularly limited. In view of weight saving of the PSA sheet, the thickness of the PSA layer is usually, suitably approximately 200 $\mu$m or less, preferably approximately 100 $\mu$m or less, and more preferably approximately 75 $\mu$m or less (e.g., approximately 60 $\mu$m or less). The thickness of the PSA layer can be approximately 55 $\mu$m or less, and may be e.g., approximately 50 $\mu$m or less, or further approximately 40 $\mu$m or less. The lower limit of the thickness of the PSA layer is not particularly limited, but is, in view of leveraging an adhesive property of the PSA layer, advantageously approximately 5 $\mu$m or more, and suitably approximately 10 $\mu$m or more, and may be preferably approximately 20 $\mu$m or more, more preferably approximately 30 $\mu$m or more, and approximately 35 $\mu$m or more.

The storage modulus of the PSA layer is not particularly limited. In a preferable embodiment, the storage modulus of the PSA layer at 0°C is $1.0 \times 10^4$ Pa or more, more preferably $5.0 \times 10^4$ Pa or more, even more preferably $1.0 \times 10^5$ Pa or more, and particularly preferably $1.2 \times 10^5$ Pa or more. The upper limit of the storage modulus of the PSA layer at 0°C is not particularly limited, but is preferably $1.5 \times 10^6$ Pa or less, more preferably $1.0 \times 10^6$ Pa or less, even more preferably $8.0 \times 10^5$ Pa or less, and particularly preferably $7.5 \times 10^5$ Pa or less. With having a storage modulus at 0°C in the aforementioned range, the PSA layer tends to have improved adhesiveness.

In the art disclosed herein, the storage modulus of a PSA layer at 0°C can be derived by measurement of dynamic viscoelasticity. In particular, a plurality of PSA layers to be measured is stacked together, thereby preparing a PSA layer having a thickness of about 2 mm. This PSA layer is punched into a disk having a diameter of 7.9 mm, then inserted and fixed between parallel plates, measured for dynamic viscoelasticity with a viscoelasticity tester (e.g., ARES or a correspondent manufactured by TA Instruments Japan Inc.) under the following conditions, and calculated for 0°C storage modulus:

- measurement mode: shear mode,
- temperature range: -70°C to 150°C,
- rate of temperature rise: 5°C/min, and
- measurement frequency: 1 Hz.

A PSA layer to be measured can be formed by applying a corresponding PSA composition in a layer, followed by drying or curing.

<Release Liner>

In the art disclosed herein, a release liner can be used in formation of a PSA layer, preparation of a PSA sheet, storage, distribution and shape processing of a unused PSA sheet, etc. The release liner is not particularly limited, and examples thereof to be used can include a release liner having a release layer on a surface of a liner substrate such as a resin film or paper, and a release liner made of a low-adhesive material such as a fluoropolymer (polytetrafluoroethylene, etc.) or a polyolefin-based resin (polyethylene, polypropylene, etc.). The release layer can be formed, e.g., by subjecting the liner substrate to surface treatment with a release agent such as a silicone-based agent, a long-chain alkyl-based agent, a fluorine-based agent, or molybdenum sulfide.

<Thickness of PSA Sheet>

The total thickness of the PSA sheet (including a PSA layer and a support substrate but no release liner) disclosed herein is not particularly limited. The total thickness of the PSA sheet can be, e.g., approximately 350 $\mu$m or less, and is, in view of weight saving, usually, suitably approximately 200 $\mu$m or less, and preferably 150 $\mu$m or less. The lower limit of the thickness of the PSA sheet is not particularly limited, can be usually approximately 20 $\mu$m or more, and is suitably, e.g., approximately 50 $\mu$m or more, preferably approximately 75 $\mu$m or more, more preferably approximately 90 $\mu$m or more (e.g., approximately 100 $\mu$m or more).

The proportion of the thickness of a PSA layer in the PSA sheet relative to the total thickness of the PSA sheet is not particularly limited. The art disclosed herein provides the total thickness of the PSA sheet in which the proportion of the thickness of a PSA layer is, e.g., suitably 75% or less, preferably 60% or less, more preferably 50% or less, and even more preferably 45% or less. The configuration provided in this manner allows further leveraging a characteristic of a support substrate. The lower limit of the proportion of the thickness of a PSA layer relative to the total thickness of the PSA sheet is not particularly limited, but is usually, suitably 5% or more, preferably 10% or more, more preferably 20% or more, and even more preferably 30 or more. The configuration provided in this manner allows further leveraging an adhesive property of the PSA layer.

<Support Substrate>

The PSA sheet disclosed herein includes a support substrate. A structure, material, etc. of the support substrate disclosed herein are not particularly limited. The support substrate is typically a film-shaped substrate (also referred to as "substrate film"). The substrate film can be preferably used with including a resin film as a base film. The base film is typically a member capable of autonomously maintaining a shape (a self-standing member). The substrate film in the art disclosed herein may be essentially formed of such a base film. Alternatively, the substrate film may include an auxiliary layer in addition to the base film. Examples of the auxiliary layer include a colored layer, a reflective layer, a primer layer and an anti-static layer placed on a surface of the base film.

The resin film is a film that contains a resin material as a major component (e.g., a component accounting for more than 50 % by weight of the resin film). Examples of the resin film include polyolefinic resin films such as polyethylene (PE), polypropylene (PP), and ethylenepropylene copolymer; polyester-based resin films such as polyethylene terephthalate (PET), polybutylene terephthalate (PBT), and polyethylene naphthalate (PEN); polyurethane-based resin films; vinyl chloride-based resin films; vinyl acetate-based resin films; polyimide-based resin films; polyamide-based resin films; fluororesin films; and cellophane. The resin film may be a rubber-based film such as natural rubber film or a butyl rubber film. In particular, preferred are polyester films among which particularly preferred are PET films, because these have good operability and processability, as well as heat resistance to an extent required for a bicycle rim PSA sheet. The term "resin film" herein typically refers to a non-porous sheet and represents a concept distinguished from so-called non-woven and woven fabrics (i.e. a concept excluding non-woven and woven fabrics).

The substrate film may be colored with a colored layer on a surface of the base film (preferably a resin film). With including a colored layer in this manner, the substrate film tends to provide an adherend with good concealing and design. In the substrate film including the base film and a colored layer, the base film may or may not include a colorant. The colored layer may be placed on either one face or separately on each face of the base film. In a configuration having a colored layer separately on each face of the base film, these colored layers may have the same or different configurations.

Such a colored layer can be typically formed by applying to the base film a colored layer-forming composition containing a colorant and a binder. As the colorant, conventionally known pigments and dyes can be used. The colorant preferably has a color. The color of the colorant can be, e.g., black, gray, red, blue, yellow, green, yellow-green, orange, purple, gold, silver and pearl. A colored colorant tends to provide an adherend with excellent concealing and design. Most of bicycle rims have a black-based color, and are preferably treated with use of a black-based colorant that provides good design. The colorant may or may not contain a colorless colorant in combination with a colored colorant. The substrate film according to a typical embodiment disclosed herein may contain substantially no colorless colorant. As used herein, the term "colored" encompasses black and metallic colors. The term "colorless" encompasses white.

As the binder, a material known in the field of paint or printing can be employed without particular limitations. Examples thereof include polyurethane, a phenol resin, an epoxy resin, a melamine-urea resin, and polymethyl methacrylate. The colored layer-forming composition can be, e.g., a solvent-based type, a UV-curable type, a heat-curable type, etc. The colored layer can be formed by employing a method conventionally used in formation of a colored layer, without particular limitations. For example, preferably employed is a method of forming a colored layer (printed layer) by gravure printing, flexographic printing, offset printing, etc.

The colored layer may have a monolayer structure formed entirely of a single layer or a multilayer structure including two, three or more colored sublayers. For instance, a colored layer having a multilayer structure with two or more colored sublayers can be formed by repeated applications (e.g. printing) of a colored layer-forming composition. Each of the colored sublayers may contain a colorant with the same or different color, amount, etc. In use of the colored layer for providing a design, the colored layer particularly advantageously has a multilayer structure in view of preventing generation of a pinhole and providing improved design.

The thickness of the whole colored layer is usually, suitably about 1 $\mu$m to 10 $\mu$m, and preferably about 1 $\mu$m to 7 $\mu$m, and can be, e.g., about 1 $\mu$m to 5 $\mu$m. When the colored layer includes two or more of colored sublayers, each colored sublayer usually preferably has a thickness of usually about 1 $\mu$m to 2 $\mu$m.

When the substrate film includes the colored layer on a surface of the base film (preferably resin film), the colored layer may be placed on an adhesive layer side and/or a side opposed to the adhesive layer side. In a preferable embodiment of the art disclosed herein, the colored layer is placed on a surface of the base film facing the adhesive layer. A configuration including the colored layer on a surface of the base film facing the adhesive layer includes the colored layer inserted and protected between the base film and a PSA layer, thus facilitating prevention of occurrence of an event where friction on a surface of the PSA sheet or the like removes a colorant and causes the PSA sheet to lose its color.

The substrate film (typically, a resin film) may contain a colorant. Such a substrate film containing a colorant tends to provide an adherend with excellent concealing and design. As the colorant in the substrate film, conventionally known pigments and dyes can be used. In a preferable embodiment in the art disclosed herein, the substrate film is a substrate containing a black colorant, more particularly a resin film kneaded with a black colorant. The substrate film kneaded with a black colorant herein refers to a substrate film in which a black colorant is mixed into a major component material of the substrate film (a material accounting the highest content of the substrate film, typically a resin material).

The black colorant is substantially dispersed in the substrate film.

As the black colorant in the substrate film, organic or inorganic colorants (pigments, dyes, etc.) can be used. Specific examples of the black colorant include carbon blacks (furnace black, channel black, acetylene black, thermal black, lamp black, turpentine soot, etc.), graphite, copper oxide, manganese(IV) oxide, aniline black, perylene black, titanium black, cyanine black, activated carbon, ferrites (non-magnetic ferrite, magnetic ferrite, etc.), magnetite, chromium oxide, iron oxide, molybdenum disulfide, chromium complexes, and anthraquinone-based colorants. In particular, carbon black is preferable.

The black colorant is not particularly limited, and a particulate colorant (pigment) can be preferably used. In a preferable embodiment, a black colorant (e.g. a black pigment such as carbon black) having a mean particle diameter of 10 nm or more (e.g. approximately 50 nm or more) can be used. The upper limit of the mean particle diameter of the black colorant is not particularly limited, and can be usually, approximately 500 nm or less, preferably approximately 300 nm or less, more preferably approximately 250 nm or less, and e.g., 200 nm or less (e.g., approximately 120 nm or less). Unless otherwise specified, the term "mean particle diameter" refers to a 50th-percentile particle diameter (50th-percentile volume mean particle diameter; hereinafter also sometimes abbreviated as $D_{50}$) in a particle size distribution measured by a particle size distribution meter based on laser scattering/diffraction.

The amount of a colorant in the substrate film is not particularly limited, and can be an amount appropriately adjusted so as to provide desired design. The amount of the black colorant is usually, suitably about 0.1 % to 30 % of the total weight of the substrate film, and can be, e.g., 0.1% to 25% by weight (typically 0.1% to 20% by weight).

The substrate film disclosed herein may include a colorant (a pigment or a dye) other than a black-colored colorant. An example of such a non-black colorant is a white colorant. Examples of the white colorant include inorganic white colorants such as titanium oxides (e.g., titanium dioxides such as rutile titanium dioxide and anatase titanium dioxide), zinc oxide, aluminum oxide, silicon oxide, zirconium oxide, magnesium oxide, calcium oxide, tin oxide, barium oxide, cesium oxide, yttrium oxide, magnesium carbonate, calcium carbonate (light calcium carbonate, heavy calcium carbonate, etc.), barium carbonate, zinc carbonate, aluminum hydroxide, calcium hydroxide, magnesium hydroxide, zinc hydroxide, aluminum silicate, magnesium silicate, calcium silicate, barium sulfate, calcium sulfate, barium stearate, zinc oxide, zinc sulfide, talc, silica, alumina, clay, kaolin, titanium phosphate, mica, gypsum, white carbon, diatomaceous earth, bentonite, lithopone, zeolite, sericite, and hydrated halloysite; organic white colorants such as acrylic resin particles, polystyrene-based resin particles, polyurethane-based resin particles, amide-based resin particles, polycarbonate-based resin particles, silicone-based resin particles, ureaformaldehyde-based resin particles, and melamine resin particles.

The amount of a non-black colorant in the substrate film is not particularly limited, and can be an amount appropriately adjusted so as to provide desired design. The amount of a non-black colorant is usually, suitably about 0.1 to 30% by weight of a resin film and can be, e.g., 0.1 to 25% by weight (typically 0.1 to 20% by weight).

To the substrate film, various additives may be added as necessary, such as a filler (an inorganic filler and an organic filler, etc.), a dispersing agent (a surfactant, etc.), an anti-aging agent, an antioxidant, a UV absorber, an anti-static agent, a slip agent, and a plasticizer. The proportion of these various additives is usually about less than 30 % by weight (e.g. less than 20 % by weight, typically less than 10 % by weight).

The substrate film may have a monolayer structure or a multilayer structure with two, three or more layers. In view of shape stability, the substrate film preferably has a monolayer structure. In use of a multilayer structure, at least one layer (preferably each layer) preferably has a continuous structure formed of the aforementioned resin (e.g., a polyester-based resin). A method for producing the substrate film (typically a resin film) is only required to appropriately employ a conventionally known method and is not particularly limited. For example, a common film-forming methods conventionally known can be appropriately employed, such as extrusion, inflation molding, T-die casting, and calender rolling.

The thickness of the support substrate disclosed herein is not particularly limited. In view of handling (operability) of the PSA sheet, pressure resistance, preferable reduction in difference in height due to an adherend, etc., the thickness of the support substrate is usually 35 $\mu$m or more, preferably 60 $\mu$m or more (e.g., 65 $\mu$m or more), even more preferably 70 $\mu$m or more, and particularly preferably 75 $\mu$m or more. The upper limit of the thickness of the support substrate is not particularly limited. The thickness of the support substrate is usually 250 $\mu$m or less, and is, in view of weight saving, preferably 200 $\mu$m or less, more preferably 150 $\mu$m or less, even more preferably 125 $\mu$m or less, and particularly preferably 100 $\mu$m or less. When the support substrate is configured with including a base film and a colored layer, the thickness of the support substrate may represent the sum of the thicknesses of the base film and the colored layer.

The surface of the substrate film may be subjected to a conventionally known surface treatment such as corona discharge, plasma treatment, UV irradiation, acid treatment, base treatment, or primer coating. Such a surface treatment may be intended to increase tight adhesion between the substrate film and the PSA layer, i.e., anchoring of the PSA layer to the substrate film. When the art disclosed herein is made in form of a substrate-mounted single-sided PSA sheet, the backside of the substrate film may be subjected to a release treatment as necessary. The release treatment may be, e.g. performed by providing a common silicone-based, long-chain alkyl-based, or fluorine-based release agent to typically form a thin layer with about 0.01 $\mu$m to 1 $\mu$m (e.g., 0.01 $\mu$m to 0.1 $\mu$m). Such a release treatment can offer an effect of facilitating unwinding of a roll formed by winding the PSA sheet in a roll and other effects.

Matters disclosed hereby encompasses the items below.

(1) A PSA sheet used for sealing a spoke hole in a bicycle rim, including:

a support substrate, and a PSA layer on one surface of the support substrate;
wherein the peel strength of the PSA sheet is 2 N/20 mm or more, as attached onto an aluminum plate as an adherend for 10 seconds and then measured under conditions at a tensile rate of 300 mm/min and a peel angle of 180°, under a temperature condition of 0°C; and
wherein the shear adhesive strength of the PSA sheet is 200 N/400 mm$^2$ or more, as measured with employing an aluminum plate as an adherend under a temperature condition of 0°C.

(2) The PSA sheet according to the item (1), wherein the PSA layer has a storage modulus of $1.0 \times 10^5$ to $1.0 \times 10^6$ Pa at 0°C.

(3) The PSA sheet according to the item (1) or (2), wherein the PSA layer is an acrylic PSA layer containing an acrylic polymer.

(4) The PSA sheet according to any one of the items (1) to (3), wherein the PSA layer contains an acrylic polymer in a proportion of more than 50% by weight of polymer components in the PSA layer; and

wherein the acrylic polymer contains an alkyl(meth)acrylate as a monomer component in a proportion of 70% by weight or more, the alkyl(meth)acrylate being represented by the formula (1):

$$CH_2=C(R^1) \, COOR^2 \qquad (1)$$

wherein in the formula (1), $R^1$ is a hydrogen atom or a methyl group, and $R^2$ is a linear alkyl group with 1 to 20 carbon atoms.

(5) The PSA sheet according to the item (4), wherein the acrylic polymer further contains a carboxy group-containing monomer as the monomer component.

(6) The PSA sheet according to any one of the items (1) to (5), wherein the thickness of the PSA layer is 30 $\mu$m or more to 75 $\mu$m or less.

(7) The PSA sheet according to any one of the items (1) to (6), wherein the support substrate is a resin film substrate.

(8) The PSA sheet according to any one of the items (1) to (7), wherein the support substrate includes a polyester film as a base film.

(9) The PSA sheet according to the item (8), wherein the support substrate further includes a colored layer on a surface of the base film facing the PSA layer.

(10) The PSA sheet according to any one of the items (1) to (9), wherein the thickness of the support substrate is 60 $\mu$m or more to 100 $\mu$m or less.

(11) The PSA sheet according to any one of the items (1) to (10), used for sealing a spoke hole in a bicycle rim for a tubeless tire.

(12) A PSA sheet roll formed with rolling the PSA sheet set forth in any one of the items (1) to (11) so as to make the PSA layer face outward.

(13) A PSA sheet-mounted bicycle rim formed with attaching the PSA sheet set forth in any one of the items (1) to (11).

[Example ]

Several examples according to the present invention will now be described below, but are not intended to limit the present invention thereto. In the description below, "part" is based on weight unless otherwise specified.

<Example 1>

(Preparation of Acrylic Polymer)

To a toluene solvent as a solvent were added 70 parts of n-butylacrylate (BA), 30 parts of 2-ethylhexylacrylate (2EHA), 3 parts of acrylic acid (AA), 0.05 parts of 4-hydoxybutylacrylate (4HBA), and 0.08 parts of AIBN as a polymerization initiator. Then, the mixture was subjected to solution polymerization at 63°C for 8 hours, thereby preparing an acrylic polymer solution. An acrylic polymer in the acrylic polymer solution thus obtained had a Tg of -57°C.

(Preparation of PSA Composition)

To the acrylic polymer solution thus obtained were added 30 parts of pentaerythritol ester of polymerized rosin (Pensel® D-125, manufactured by Arakawa Chemical Industries Inc.) and 3 parts of an isocyanate-based crosslinking agent (Coronate® L, manufactured by Nippon Polyurethane Industry Co., Ltd. (present Tosoh Corporation)), thereby preparing an acrylic PSA composition. The solid contents in the PSA composition thus obtained has a storage modulus of $5 \times 10^5$ Pa at 0°C.

(Production of PSA Sheet)

A release liner prepared was a polyester release film having one side serving a release face treated with a release agent (product name: "Diafoil™ MRF"; thickness: 38 μm; manufactured by Mitsubishi Chemical Corporation). On the release face of the release liner, the PSA composition is applied so as to provide a post-drying thickness of 35 μm, and dried at 100°C for 1 minute. In this manner, a PSA layer was formed on the release face of the release liner.

A support substrate used was a support substrate having a multilayer structure with a total thickness of about 80 μm formed of a transparent PET film with a thickness of 75 μm (product name "Lumirror™", manufactured by Toray Industries Inc.) and a black printed layer placed on one side of the PET film. The black printed layer was formed by five-layer printing with employing gravure printing and using an ink composition containing a black colorant. The PSA layer formed on the release liner was attached onto a surface including a black printed layer in the support substrate, thereby preparing a PSA sheet according to the example (transfer method). The release liner was left on the PSA layer as is, and used for protecting a surface of the PSA layer (adhesive face).

(Production of PSA Sheet Roll)

The release liner-mounted PSA sheet described above was cut, thereby preparing a sample to be rolled having a width of 25 mm and a length of about 50 m. In addition, a PSA tape was prepared for fixing a winding core and an end part of the PSA sheet. The diameter of the winding core and the type and size of a PSA tape for fixing the end part are not particularly limited. For instance, in the example, a winding core prepared was a cylindrical core having an outer diameter of 82.5 mm, an inner diameter of 76.5 mm, and a shaft length of 25 mm. A PSA sheet roll was produced by fixing one longitudinal end of the sample (wrapping start end) to an outer circumferential face with a commercially available PSA tape so as to make a support substrate side of the sample to be rolled face an inner circumference, and then wrapping the core with the remaining part of the sample. The other longitudinal end of the sample (wrapping termination end) was fixed to an outer side face of the sample on an inner circumference (a surface opposed to a PSA layer of the release liner) with a commercially available PSA tape.

<Example 2>

(Preparation of Acrylic Polymer Emulsion)

A reactor equipped with a coolant pipe, a nitrogen inlet, a thermometer, and a stirrer was charged with 40 parts of ion-exchange water, and stirred at 60°C for 1 hour or more with introducing nitrogen gas. Then, the reactor was charged with 0.1 parts of 2,2'-azobis[2-(5-methyl-2-imidazolin-2-yl) propane]dihydrochrolide as a polymerization initiator, and stirred for 1 hour with introducing nitrogen gas to rise temperature to 60°C. To this, a monomer emulsion was slowly added dropwise for 4 hours to forward an emulsion polymerization reaction. A monomer emulsion used was an emulsion derived by adding 85 parts of 2EHA, 13 parts of methylacrylate (MA), 1.2 parts of AA, 0.75 parts of methacrylic acid (MAA), 0.048 parts of t-lauryl mercaptan (*t*-LSH) as a chain transfer agent, 0.02 parts of 3-metacryloxypropyltrimethoxysilane (product name "KBM-503" by Shin-Etsu Chemical Co., Ltd.), and 2 parts of sodium polyoxyethylene lauryl sulfate as an emulsifier to 30 parts of ion-exchange water, followed by emulsification. After finish of dropping of the monomer emulsion, the reaction was further kept at 60°C for 3 hours, and then 0.2 parts of a 35% hydrogen peroxide solution and 0.6 parts of ascorbic acid were added. After cooling to ordinary temperature, the reaction liquid was adjusted to pH 7 by adding 10% ammonium water. In this manner, an emulsion of an acrylic polymer was provided. The acrylic polymer in the emulsion of the acrylic polymer thus obtained had an Tg of -60°C.

(Preparation of PSA Composition)

To 100 parts of the acrylic polymer in the emulsion thus obtained was added and mixed 5 parts on solid content basis of an aqueous emulsion of polymerized rosin ester having a softening point of 160°C (product name "E-865NT" by Arakawa Chemical Industries Inc.) as a tackifier resin. Furthermore, 10% ammonium water as a pH adjuster and polyacrylic acid (product name "Aron® B-500" by Toagosei Co., Ltd.) as a thickener were used to adjust pH to 8.0 and viscosity to 10 Pa•s, thereby providing the acrylic PSA composition according to the example. Solid contents in the PSA composition thus obtained had a storage modulus of $2 \times 10^5$ Pa at 0°C.

(Production of PSA Sheet and PSA Sheet Roll)

A PSA sheet was produced in the same manner as in Example 1 except for applying the PSA composition so as to provide a post-drying thickness of 50 μm. A PSA sheet roll was produced in the same manner as in Example 1 except for using the PSA sheet.

<Example 3>

(Preparation of Acrylic Polymer Emulsion)

A reactor equipped with a coolant pipe, a nitrogen inlet, a thermometer, and a stirrer was charged with 0.1 parts of 2,2'-azobis[N-(2-carboxyethyl) -2-methylpropioneamidine]hydrate (product name "VA-057", manufactured by Wako Pure Chemical Corporation (present FUJIFILM Wako Pure Chemical Corporation)) as a polymerization initiator and 35 parts of ion-exchange water, and stirred for 1 hour with introducing nitrogen gas to rise temperature to 60°C. To this, a monomer emulsion was slowly added dropwise for 4 hours to forward an emulsion polymerization reaction. A monomer emulsion used was an emulsion derived by adding 68 parts of BA, 29.1 parts of 2EHA, 2.9 parts of AA, 0.05 parts of dodecanethiol as a chain transfer agent, and 2 parts of sodium polyoxyethylene alkyl ether sulfate as an emulsifier to 40 parts of ion-exchange water, followed by emulsification. After finish of dropping of the monomer emulsion, the reaction was further kept at 60°C for 2 hours, and then 0.1 parts of a 35% hydrogen peroxide solution and 0.1 parts of ascorbic acid were added. After cooling to ordinary temperature, the reaction liquid was adjusted to pH 7 by adding 10% ammonium water. In this manner, an emulsion of an acrylic polymer was provided. The acrylic polymer in the emulsion of the acrylic polymer thus obtained had an Tg of-57°C.

(Preparation of PSA Composition)

To 100 parts of the acrylic polymer in the emulsion thus obtained was added 30 parts (on solid content basis) of a tackifier resin emulsion to prepare a. PSA composition. The tackifier resin used was the product "Tamanol® E-200-NT" manufactured by Arakawa Chemical Industries Inc. Furthermore, 10% ammonium water as a pH adjuster and polyacrylic acid (product name "Aron® B-500" by Toagosei Co., Ltd.) as a thickener were used to adjust pH to 8.0 and viscosity to 10 Pa•s, thereby providing the acrylic PSA composition according to the example. Solid contents in the PSA composition thus obtained had a storage modulus of $7 \times 10^5$ Pa at 0°C.

(Production of PSA Sheet and PSA Sheet Roll)

A PSA sheet was produced in the same manner as in Example 1 except for applying the PSA composition so as to provide a post-drying thickness of 60 μm. A PSA sheet roll was produced in the same manner as in Example 1 except for using the PSA sheet.

<Comparative Example 1>

(Preparation of Acrylic Polymer Solution)

A polymerization container was charged with 100 parts of BA 5 parts of AA, and 150 parts of toluene, and subjected to nitrogen substitution at room temperature for 1 hour. Subsequently, the mixture was heated to 60°C, followed by addition of 0.2 parts of benzoyl peroxide as a polymerization initiator, and polymerized at 63°C for 7 hours, thereby providing an acrylic polymer solution. The acrylic polymer in the acrylic polymer solution thus obtained had a Tg of -50°C.

(Preparation of PSA Composition)

To the acrylic polymer solution thus obtained were added 20 parts of terpene-modified phenol resin (PR-12603N, manufactured by Sumitomo Bakelite Co., Ltd.), 20 parts of meta-xylene formaldehyde polycondensation product (Nicanol® H-80, manufactured by Mitsubishi Gas Chemical Company, Inc.), 1 part of butylated melamine resin (Amidia® J-820-60-N, manufactured by DIC Corporation), and 2 parts of isocyanate-based crosslinking agent (Coronate® L, manufactured by Nippon Polyurethane Industry Co., Ltd. (present Tosoh Corporation) to prepare an acrylic PSA composition.

(Production of PSA Sheet and PSA Sheet Roll)

A PSA sheet was produced in the same manner as in Example 1 except for applying the PSA composition so as to provide a post-drying thickness of 30 $\mu$m and using a PE film that is kneaded with a black pigment and has a thickness of 130 $\mu$m (product name "No. 440", manufactured by Nitto Denko Corporation). A PSA sheet roll was produced in the same manner as in Example 1 except for using the PSA sheet.

<Comparative Example 2>

(Preparation of Acrylic Polymer Solution)

To a toluene solvent were added 65 parts of BA, 35 parts of 2EHA, 6 parts of AA, 0.05 parts of 4HBA, and 0.08 parts of AIBN as a polymerization initiator. Subsequently, the mixture was subjected to solution polymerization at 63°C for 8 hours to provide an acrylic polymer solution. The acrylic polymer in the acrylic polymer solution thus obtained had a Tg of-55°C.

(Preparation of PSA Composition)

An acrylic PSA composition was prepared in the same manner as in Example 1 except for using the acrylic polymer solution described above.

(Production of PSA Sheet and PSA Sheet Roll)

A PSA sheet and a PSA sheet roll were produced in the same manner as in Example 1 except for using the PSA composition described above.

<Comparative Example 3>

(Preparation of Acrylic Polymer Solution)

To a toluene solvent were added 35 parts of BA, 65 parts of 2EHA, 5 parts ofAA, 0.05 parts of 4HBA, and 0.06 parts of AIBN as a polymerization initiator. Subsequently, the mixture was subjected to solution polymerization at 70°C for 8 hours to provide an acrylic polymer solution. The acrylic polymer in the acrylic polymer solution thus obtained had a Tg of-60°C.

(Preparation of Acrylic PSA Composition)

An acrylic PSA composition was prepared in the same manner as in Example 1 except for using the acrylic polymer solution described above.

(Production of PSA Sheet and PSA Sheet Roll)

A PSA sheet and a PSA sheet roll were produced in the same manner as in Example 1 except for using the PSA composition described above.

Monomer composition, a polymerization method, and weight-average molecular weight (Mw) of an acrylic polymer of each example are shown in corresponding fields in Table 1.

(Low-temperature Immediate Post-attachment Peel Strength So)

A PSA sheet of each example were cut with a width of 20 mm and a length of 100 mm and prepared as a sample for peel strength measurement. The sample, an aluminum plate (manufactured by UACJ Corporation; product name: Alumi W13C1; surface roughness: Ra = 0.01 to 0.02 $\mu$m; alloy No. A1085) as an adherend, and a 2 kg attachment roller were placed under a temperature condition of 0°C for 60 minutes. Then, an adhesive face of the sample was attached to the adherend by moving the roller once back and forth at a speed of 5 mm/sec under a temperature condition of 0°C. Ten seconds after the attachment, under conditions at a tensile rate of 300 mm/min, an environment of 0°C, and a peel angle of 180°, the sample was ripped from the adherend and measured for peel strength at that time to provide the strength as low-temperature immediate post-attachment peel strength. For the measurement, a tensile compression tester manufactured by MinebeaMitsumi Inc. (model number: TG-1kN) was used. The results thus obtained were shown in corresponding fields in Table 1.

(Low-temperature Shear Adhesive Strength Po)

A PSA sheet of each example were cut with a width of 20 mm and a length of 50 mm and prepared as a sample for measurement of shear adhesive strength. Under an environment at 23°C and 50%RH, an aluminum plate (manufactured by UACJ Corporation; product name: Alumi W13C1; surface roughness: Ra = 0.01 to 0.02 $\mu$m; alloy No. A1085) was disposed as an adherend such that a longitudinal end part of the sample overlaps a site at a distance of 20 mm from an end part of the adherend, and that the other end part opposed to the aforementioned end part of the sample extrudes from the aforementioned end part of the adherend; attached together in an attaching area of 20 mm × 20 mm by moving a 2 kg roller once back and forth at a speed of 5 mm/sec; and left under an environment at 23°C and 50%RH for 30 minutes. At that time, a PET film having a thickness of 25 $\mu$m (product name "Lumirror™", manufactured by Toray Industries Inc.) was used to support a part extruded from the adherend of the sample (unattached part). Subsequently, after left under an environment at 0°C for 60 minutes, the unattached part thus supported was held with a chuck and pulled in a shear direction (at a tensile angle of 0°) at tensile rate of 300 mm/min under an environment at 0°C, and measured for tensile strength at that time to provide the strength as low-temperature shear adhesive strength. For the measurement, a tensile compression tester manufactured by MinebeaMitsumi Inc. (model number: TG-1kN) was used. The results thus obtained were shown in corresponding fields in Table 1.

(Evaluation of Workability)

An operation of wrapping a PSA sheet roll of each example onto an outer circumference of a spoke-joining area of a bicycle rim was performed as follows. Under a temperature condition of 0°C, the PSA sheet roll was a little unrolled, and an end of the PSA sheet was attached to a certain point (starting point) on an outer circumference inside a rim. Then, the PSA sheet was wrapped around the whole outer circumference inside the rim (one lap) while being further unrolled. The aforementioned operation was performed with peeling the release liner on a surface of the PSA layer, from the end of the PSA sheet to an unrolled site corresponding to unrolling of the PSA sheet. If the operation was successfully completed without the end of the PSA sheet not peeling off from a starting point during the operation, judgement was "Yes". If the end of the PSA sheet was peeled off during the operation, judgement was "No". The results thus obtained are shown in corresponding fields in Table 1.

[Table 1]

Table 1

| | | Example 1 | Example 2 | Example 3 | Comperative Example 1 | Comperative Example 2 | Comperative Example 3 |
|---|---|---|---|---|---|---|---|
| Monomer composition (weight part) | BA | 70 | - | 68 | 100 | 65 | 35 |
| | 2EHA | 30 | 85 | 29.1 | - | 35 | 65 |
| | AA | 3 | 1.2 | 2.9 | 5 | 6 | 5 |
| | 4HBA | 0.05 | - | - | - | 0.05 | 0.05 |
| | MA | - | 13 | - | - | - | - |
| | MAA | - | 0.75 | - | - | - | - |
| Polymerization method | | Solution | Emulsion | Emulsion | Solution | Solution | Solution |
| Weight-average molecular weight (x10$^4$) | | 38 | 45 | 85 | 51 | 46 | 39 |
| Low-temperature immediate post-attachment peel strength (N/20mm) | | 5 | 5 | 2 | 0 | 1 | 2 |
| Low-temperature shear adhesive strength (N/400mm$^2$) | | 227 | 257 | 265 | 87 | 250 | 170 |

(continued)

|  | Example 1 | Example 2 | Example 3 | Comperative Example 1 | Comperative Example 2 | Comperative Example 3 |
|---|---|---|---|---|---|---|
| Workability | Yes | Yes | Yes | No | No | No |

The results shown in Table 1 reveals and confirms that the PSA sheets in Examples 1 to 3, which have a low-temperature immediate post-attachment peel strength of 2 N/20 mm or more and a low-temperature shear adhesive strength of 200 N/400 mm$^2$ or more, provide good workability in an operation of wrapping onto a spoke-joining area in a bicycle rim relative to Comparative Examples 1 to 3, in which at least one of low-temperature immediate post-attachment peel strength or low-temperature shear adhesive strength was out of the aforementioned range.

Although specific embodiments of the present invention have been described in detail so far, these are merely illustrative and do not limit the scope of the claims. The art recited in the claims includes various modifications and changes made to the specific embodiments illustrated above.

[Reference Signs List]

10 tubeless tired wheel
12 wheel
14 hub
16 rim
18 spoke
20 tire
32 spoke hole
40 PSA sheet
50 tube-mounted tired wheel
60 support substrate
64 PSA layer
66 adhesive face
68 release liner
70 release liner-mounted PSA sheet

**Claims**

1.    A pressure sensitive adhesive sheet used for sealing a spoke hole in a bicycle rim, comprising:

      a support substrate, and a pressure sensitive adhesive layer on one surface of the support substrate;
      wherein the peel strength of the pressure sensitive adhesive sheet is 2 N/20 mm or more, as attached onto an aluminum plate as an adherend and then, 10 seconds after the attachment, measured under conditions at a tensile rate of 300 mm/min and a peel angle of 180°, under a temperature condition of 0°C; and
      wherein the shear adhesive strength of the pressure sensitive adhesive sheet is 200 N/400 mm$^2$ or more, as measured with employing an aluminum plate as an adherend under a temperature condition of 0°C.

2.    The pressure sensitive adhesive sheet according to claim 1, wherein the pressure sensitive adhesive layer has a storage modulus of $1.0 \times 10^5$ to $1.0 \times 10^6$ Pa at 0°C.

3.    The pressure sensitive adhesive sheet according to claim 1 or 2, wherein the pressure sensitive adhesive layer is an acrylic pressure sensitive adhesive layer comprising an acrylic polymer.

4.    The pressure sensitive adhesive sheet according to any one of claims 1 to 3, wherein the thickness of the pressure sensitive adhesive layer is 30 $\mu$m or more to 75 $\mu$m or less.

5.    The pressure sensitive adhesive sheet according to any one of claims 1 to 4, wherein the support substrate is a resin film substrate.

6. The pressure sensitive adhesive sheet according to any one of claims 1 to 5, wherein the support substrate includes a polyester film as a base film.

7. The pressure sensitive adhesive sheet according to claim 6, wherein the support substrate further includes a colored layer on a surface of the base film facing the pressure sensitive adhesive layer.

8. The pressure sensitive adhesive sheet according to any one of claims 1 to 7, wherein the thickness of the support substrate is 60 $\mu$m or more to 100 $\mu$m or less.

9. The pressure sensitive adhesive sheet according to any one of claims 1 to 8, used for sealing a spoke hole in a bicycle rim for a tubeless tire.

FIG.1

FIG.2

FIG.3

FIG.4

FIG.5

FIG.6

## INTERNATIONAL SEARCH REPORT

| | International application No. |
|---|---|
| | **PCT/JP2022/021145** |

**A. CLASSIFICATION OF SUBJECT MATTER**

***B60B 21/12***(2006.01)i; ***C09J 133/00***(2006.01)i; ***C09J 201/00***(2006.01)i; ***C09J 7/25***(2018.01)i; ***C09J 7/29***(2018.01)i; ***C09J 7/38***(2018.01)i

FI: C09J7/38; C09J7/25; C09J7/29; C09J201/00; C09J133/00; B60B21/12 Z

According to International Patent Classification (IPC) or to both national classification and IPC

**B. FIELDS SEARCHED**

Minimum documentation searched (classification system followed by classification symbols)

B60B21/12; C09J133/00; C09J201/00; C09J7/25; C09J7/29; C09J7/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)


**C. DOCUMENTS CONSIDERED TO BE RELEVANT**

| Category* | Citation of document, with indication, where appropriate, of the relevant passages | Relevant to claim No. |
|---|---|---|
| X | JP 7-223401 A (KYOWA KK) 22 August 1995 (1995-08-22) | 1-6, 8 |
| | claims, paragraphs [0002]-[0008], [0018]-[0023], [0039]-[0043], fig. 2-4 | |
| Y | | 1-5, 8-9 |
| X | JP 3072256 U (CHENG SHIN RUBBER IND CO LTD) 06 October 2000 (2000-10-06) | 1, 9 |
| | paragraph [0002] | |
| Y | | 1-5, 8-9 |
| Y | JP 2007-508184 A (CASTALLOY MANUFACTURING PTY LTD) 05 April 2007 (2007-04-05) | 1-5, 8-9 |
| | claims, paragraphs [0003]-[0007], [0021], [0024], fig. 2, examples | |
| X | JP 63-025101 A (BRIDGESTONE CORP) 02 February 1988 (1988-02-02) | 1-5, 8-9 |
| | claims, p. 1, lower right column, line 12 to p. 2, upper left column, line 16, p. 2, upper right column, line 6 to p. 3, upper left column, line 13, examples | |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 August 2022** | **09 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

International application No.

**PCT/JP2022/021145**

### C.    DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 122921/1986 (Laid-open No. 028505/1988) (TAGUCHI, Hiromitsu) 25 February 1988 (1988-02-25), entire text | 1-9 |
| A | CN 112004897 A (3M INNOVATIVE PROPERTIES CO.) 27 November 2020 (2020-11-27) entire text | 1-9 |

Form PCT/ISA/210 (second sheet) (January 2015)

## INTERNATIONAL SEARCH REPORT
### Information on patent family members

International application No.

**PCT/JP2022/021145**

| Patent document cited in search report | | | Publication date (day/month/year) | Patent family member(s) | | | Publication date (day/month/year) |
|---|---|---|---|---|---|---|---|
| JP | 7-223401 | A | 22 August 1995 | (Family: none) | | | |
| JP | 3072256 | U | 06 October 2000 | (Family: none) | | | |
| JP | 2007-508184 | A | 05 April 2007 | US | 2007/0029867 | A1 | |
| | | | | claims, paragraphs [0003]-[0007], [0024], [0027], fig. 2, examples | | | |
| | | | | WO | 2005/037573 | A1 | |
| | | | | EP | 1689596 | A1 | |
| | | | | KR | 10-2006-0120667 | A | |
| | | | | CN | 1867463 | A | |
| JP | 63-025101 | A | 02 February 1988 | (Family: none) | | | |
| JP | 63-028505 | U1 | 25 February 1988 | (Family: none) | | | |
| CN | 112004897 | A | 27 November 2020 | WO | 2019/202570 | A1 | |
| | | | | entire text | | | |
| | | | | EP | 3781633 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021095920 A
- JP 2004075044 A
- JP 2007051271 A

**Non-patent literature cited in the description**

- Polymer Handbook. John Wiley & Sons, Inc, 1989